# EUROPÄISCHE PATENTSCHRIFT

(11) **EP 3 523 516 B1**
(45) Veröffentlichungstag und Bekanntmachung des Hinweises auf die Patenterteilung: **13.05.2020**
(21) Anmeldenummer: 17777182.1
(22) Anmeldetag: 13.09.2017
(51) Int. Cl.: F01N 3/08, B01D 53/62

(54) **VERFAHREN UND VORRICHTUNG ZUR ABGASREINIGUNG**
METHOD AND DEVICE FOR PURIFYING EXHAUST GAS
PROCÉDÉ ET DISPOSITIF D'ÉPURATION DE GAZ D'ÉCHAPPEMENT

(30) Priorität: 05.10.2016 DE 102016219301
(43) Veröffentlichungstag der Anmeldung: 14.08.2019
(73) Patentinhaber: Audi AG, 85045 Ingolstadt (DE)
(72) Erfinder: HEIGL, Roland, 85117 Eitensheim (DE); MÜLLER-HELLWIG, Simone, 85051 Ingolstadt (DE); KRAJETE, Alexander, 4020 Linz (AT); SEIFERT, Arne, 1120 Wien (AT)
(86) Internationale Anmeldenummer: PCT/EP2017/072962
(87) Internationale Veröffentlichungsnummer: WO 2018/065179

(56) Entgegenhaltungen:
- EP-A1- 2 665 544
- WO-A1-2012/100165

## Beschreibung

Die vorliegende Erfindung betrifft ein Verfahren zum Reinigen von durch eine Brennkraftmaschine erzeugtem Abgas und ein Abgassystem für eine Brennkraftmaschine. Ferner betrifft die vorliegende Erfindung ein Fahrzeug mit einem zur Durchführung des vorgestellten Verfahrens konfigurierten Abgassystem.

Beim Betrieb von Brennkraftmaschinen entsteht Abgas, das mit Schadstoffen, wie bspw. Kohlenstoffdioxid belastet ist. Da derartige Schadstoffe umweltschädlich sind, werden fortlaufend strengere Grenzwerte für eine Konzentration derartiger Schadstoffe in Abgasen von Brennkraftmaschinen festgesetzt. Bisherige Verfahren zur Abgasnachbehandlung zum Senken einer Konzentration von durch eine Brennkraftmaschine ausgestoßenen Schadstoffen basieren auf einer Oxidation bzw. Reduktion der Schadstoffe mittels Katalysatoren.

In der europäischen Druckschrift EP 29 599 56 A1 wird ein Verfahren zum Absorbieren von Kohlenstoffdioxid aus einem kohlenstoffdioxidhaltigen Gas offenbart.

Die US-amerikanische Druckschrift US 2015 0033 711 A offenbart ein Fahrzeug mit einem Kohlenstoffdioxidabscheide-System, das dazu konfiguriert ist, abgeschiedenes Kohlenstoffdioxid in einem Speicher zu speichern.

Ein zyklischer Prozess zur Regeneration von absorbierten Gasen und einer Regeneration eines keramischen Absorbtionsmaterials ist in der USamerikanischen Druckschrift US 2015 012 53 68 A offenbart.

Die internationale Druckschrift WO 2013 109 895 A1 offenbart ein Verfahren, bei dem ein Wärmeaustauschprozess von adsorbiertem Kohlenstoffstoffdioxid mit einem von einer Brennkraftmaschine erzeugten heißen Abgasstrom stattfindet.

Die WO 2012 100 165 A1 beschreibt ein Verfahren und ein System für die Behandlung eines Abgasstroms eines Verbrennungsmotors, der CO₂ enthält. Der Abgasstrom wird mit einem CO₂-Adsorber mit einer vorbestimmten Kapazität kontaktiert, um CO₂ aus dem Abgasstrom zu extrahieren. Der behandelte Abgasstrom mit reduziertem CO₂-Gehalt wird in die Atmosphäre abgeleitet. Wenn die Konzentration des durch den Adsorber extrahierten CO₂ ein vorbestimmtes Niveau erreicht hat, wird der Kontakt des Abgasstroms mit dem Adsorber unterbrochen. Der CO₂-Adsorber wird erhitzt, um das extrahierte CO₂ freizusetzen und den Adsorber zu regenerieren. Es wird ein im Wesentlichen reiner CO₂-Gasstrom erhalten. Das zurückgewonnene CO₂-Gas wird an Bord des Fahrzeugs komprimiert und im Fahrzeug zwischengespeichert.

In der EP 2 665 544 A1 werden ein Verfahren und ein System zur Behandlung eines Abgasstroms eines Verbrennungsmotors, der CO₂ enthält, beschrieben, um die in die Atmosphäre abgegebene Menge an CO₂ zu verringern. Das System umfasst eine Behandlungszone an Bord des Fahrzeugs, die einen Adsorber mit einer vorbestimmten Kapazität zum Extrahieren von CO₂ aus dem Abgasstrom enthält; eine Kompressionszone, die in Fluidverbindung mit dem CO₂-Auslass aus der Behandlungszone steht, um das Volumen des CO₂ zu verringern; eine Speicherzone zum Aufnehmen des komprimierten CO₂ zur zeitweiligen Speicherung an Bord des Fahrzeugs; und eine Abgasleitung in Fluidverbindung mit dem Auslass des behandelten Abgasstroms aus der Behandlungszone.

Vor diesem Hintergrund ist es eine Aufgabe der vorliegenden Erfindung, eine Möglichkeit für einen schadstoffarmen Betrieb einer Brennkraftmaschine bereitzustellen.

Zur Lösung der voranstehend genannten Aufgabe wird ein Verfahren zum Reinigen von durch eine Brennkraftmaschine erzeugtem Abgas vorgestellt, bei dem das durch die Brennkraftmaschine erzeugte Abgas durch einen Abgaspfad geleitet wird, in dem mindestens ein Adsorptionselement angeordnet ist, an dem in dem Abgas enthaltene Schadstoffe zumindest teilweise gebunden werden, und bei dem das mindestens eine Adsorptionselement durch zumindest teilweise Desorption der gebundenen Schadstoffe regeneriert wird, und bei dem während der Desorption von dem mindestens einen Adsorptionselement desorbierte Schadstoffe in mindestens einem Speicher gespeichert werden, dadurch gekennzeichnet, dass das mindestens eine Adsorptionselement mittels Durchströmung des mindestens einen Adsorptionselements mit einem Hilfsgas regeneriert wird.

Ausgestaltungen der vorgestellten Erfindung ergeben sich aus der Beschreibung und den abhängigen Ansprüchen.

Das vorgestellte Verfahren dient insbesondere zum Reinigen von durch eine Brennkraftmaschine, wie bspw. einem Diesel-, Otto- oder Gasmotor erzeugtem Abgas. Dazu ist erfindungsgemäß vorgesehen, dass in von der Brennkraftmaschine erzeugtem Abgas enthaltene Schadstoffe, insbesondere Kohlenstoffdioxid, mittels mindestens eines Adsorptionselements zumindest teilweise adsorbiert werden. Dies bedeutet, dass in dem Abgas enthaltene Schadstoffe zumindest teilweise in einem Adsorbtionsschritt an dem mindestens einen Adsorptionselement angereichert und dort zumindest zeitweise, d. h. für einen beschränkten Zeitraum, gespeichert werden. Nach dem Zeitraum werden die Schadstoffe aus bzw. von dem mindestens einen Adsorptionselement in einem Desorptionsschritt desorbiert und schließlich in einen Speicher überführt. Dabei kann der Zeitraum, für den die Schadstoffe an dem mindestens einen Adsorptionselement gespeichert werden, bspw. in Abhängigkeit einer Adsorptionskapazität des mindestens einen Adsorptionselements gewählt werden.

Unter einem Adsorptionselement ist im Kontext der vorliegenden Erfindung eine Vorrichtung zu verstehen, die dazu geeignet ist, einen Stoff, wie bspw. einen Schadstoff, aus einem Abgas zu extrahieren und an ihrer Oberfläche anzureichern. Durch die Verwendung eines Adsorptionselements ist es im Vergleich zu einem Absorptionselement möglich, an einem Adsorptionselement angereicherte Partikel, wie bspw. Schadstoffe, schneller und unter Einsatz weniger Energie, d. h. effizienter, zu desorbieren.

Das erfindungsgemäße Verfahren ist insbesondere dreistufig gestaltet, so dass in einer ersten Stufe in einem jeweiligen Abgas enthaltene Schadstoffe durch das mindestens eine erfindungsgemäß vorgesehene Adsorptionselement adsorbiert bzw. angereichert werden und in einer zweiten Stufe die an dem Adsorptionselement angereicherten Schadstoffe desorbiert werden. Zur Desorption der Schadstoffe von dem mindestens einen Adsorptionselement, d. h. zum Herauslösen bzw. Abscheiden der Schadstoffe aus bzw. von dem mindestens einen Adsorptionselement, wird das Adsorptionselement mit einem Hilfsgas durchströmt. Sobald von dem mindestens einen Adsorptionselement desorbierte Schadstoffe frei vorliegen, ist vorgesehen, dass in einer dritten Stufe die desorbierten Schadstoffe in einen Speicher überführt und dort gespeichert werden. Dies bedeutet, dass in dem Abgas enthaltene Schadstoffe in einen Speicher überführt und dort angereichert werden. Die in dem Speicher angereicherten Schadstoffe können als Rohstoff für in der Brennkraftmaschine ablaufende Prozesse verwendet oder aus dem Speicher entnommen und bspw. in einen bzgl. der Brennkraftmaschine externen Speicher überführt werden, um schließlich als Rohstoff einer weiteren Verwendung zugeführt zu werden.

In einer möglichen Ausgestaltung des vorgestellten Verfahrens ist vorgesehen, dass das mindestens eine Adsorptionselement mindestens eine Adsorptionsschicht aus einem Material der folgenden Liste an Materialien oder einer Kombination daraus aufweist: Aluminiumoxid oder Aluminiumsilikat.

Es hat sich als vorteilhaft erwiesen, das erfindungsgemäß vorgesehene mindestens eine Adsorptionselement mit einer aluminiumbasierten Adsorptionsschicht, an der sich jeweilige Schadstoffe anlagern, auszustatten. Besonders vorteilhaft haben sich dabei Adsorptionsschichten aus Al₂O₃ oder Aluminiumsilikat erwiesen.

In einer weiteren möglichen Ausgestaltung des vorgestellten Verfahrens ist vorgesehen, dass das mindestens eine Adsorptionselement ein festes Adsorptionselement mit einer anorganischen oder organischen Matrix ist. Dabei ist ferner vorgesehen, dass die Schadstoffe an der mindestens einen Adsorptionsschicht regenerativ gebunden werden.

Das erfindungsgemäß vorgesehene mindestens eine Adsorptionselement kann bspw. als fester Körper in einem Abgassystem einer jeweiligen Brennkraftmaschine vorgesehen sein. Dabei kann das Adsorptionselement eine Trägermatrix aufweisen, auf die eine Adsorptionsschicht aufgebracht ist. Es ist denkbar, dass das Adsorptionselement bspw. wabenförmig oder in jeder weiteren Form zum Maximieren einer Oberfläche des Adsorptionselements ausgestaltet ist.

Um eine Desorption von an dem erfindungsgemäß vorgesehenen mindestens einen Adsorptionselement angereicherten Schadstoffen zu erreichen, und die an dem Adsorptionselement angereicherten Schadstoffe in einen Speicher zu überführen, ist es vorgesehen, dass das Adsorptionselement, bzw. eine Adsorptionsschicht des Adsorptionselements, dazu konfiguriert ist, jeweilige Schadstoffe regenerativ, d. h. lösbar bzw. reversibel zu binden. Dazu kann insbesondere vorgesehen sein, dass die Schadstoffe durch physikalische Kräfte, d. h. physisorptiv, durch bspw. eine elektrostatische Wechselwirkung der Schadstoffe mit dem Adsorptionselement, an dem Adsorptionselement angereichert werden.

In einer weiteren möglichen Ausgestaltung des vorgestellten Verfahrens ist vorgesehen, dass durch das mindestens eine Desorptionselement gebundene Schadstoffe mittels Durchströmung des mindestens einen Adsorptionselements mit einem Hilfsgas und eines Desorptionsverfahrens der folgenden Liste an Desorptionsverfahren oder einer Kombination daraus desorbiert werden: Erhöhung einer Temperatur des mindestens einen Adsorptionselements, Erhöhung einer Temperatur in einer Umgebung des mindestens einen Adsorptionselements, Reduktion eines Atmosphärendrucks in der Umgebung des mindestens einen Adsorptionselements.

Um das mindestens eine erfindungsgemäß vorgesehene Adsorptionselement zu regenerieren, d. h. an dem mindestens einen Adsorptionselement angereicherte Schadstoffe zu desorbieren bzw. von dem mindestens einen Adsorptionselement zu lösen, kann vorgesehen sein, dass das mindestens eine Adsorptionselement einer Temperatur- und/oder Druckänderung unterzogen wird. Insbesondere durch eine Erwärmung des mindestens einen Adsorptionselements können Wechselwirkungen zwischen jeweiligen Schadstoffen und dem mindestens einen Adsorptionselement, unabhängig davon, ob diese chemischer oder physikalischer Art sind, gelöst werden. Entsprechend begünstigt eine Erwärmung des Adsorptionselements eine Desorption der Schadstoffe von bzw. aus dem Adsorptionselement, so dass sich die Schadstoffe von dem mindestens einen Adsorptionselement lösen und in einen Speicher überführt werden können.

Erfindungsgemäß erfolgt eine Desorption des mindestens einen erfindungsgemäß vorgesehenen Adsorptionselements mittels eines Hilfsgases, d. h. einem Gas, das bspw. aus einem Hilfsgasspeicher oder aus einer Umgebung eines entsprechenden Abgassystems in bzw. um das mindestens eine Adsorptionselement geleitet wird, und an dem mindestens einen Adsorptionselement angereicherte Schadstoffe aufnimmt.

Es hat sich als besonders vorteilhaft erwiesen, eine Erwärmung des mindestens einen Adsorptionselements mit einem Durchströmungsverfahren mittels eines Hilfsgases und/oder eine Druckminderung in einer Umgebung des mindestens einen Adsorptionselements mit einem Durchströmungsverfahren mittels eines Hilfsgases zu kombinieren. Durch eine Kombination einer Erwärmung des mindestens einen Adsorptionselements mit einem Durchströmungsverfahren mittels eines Hilfsgases können aufgrund der Erwärmung leicht von dem mindestens einen Adsorptionselement zu lösende Schadstoffe von einem entsprechenden Hilfsgasstrom aufgenommen und mit diesem abtransportiert werden. Als besonders geeignetes Hilfsgas zum Desorbieren von Kohlenstoffdioxid hat sich reines Kohlenstoffdioxidgas erwiesen, da dieses nicht mehr von dem Kohlstoffdioxid, das von dem mindestens einen Adsorptionselement als Schadstoff desorbiert wurde, getrennt zu werden braucht. Alternativ hat sich auch die Verwendung von Luft als Hilfsgas als geeignet erwiesen.

In einer weiteren möglichen Ausgestaltung des vorgestellten Verfahrens ist vorgesehen, dass während der Desorption von dem mindestens einen Adsorptionselement freigesetzte Schadstoffe mittels eines Druckerzeugers in den mindestens einen Speicher geleitet und in dem mindestens einen Speicher unter Erzeugung von Druck angereichert werden.

Unter Verwendung eines Druckerzeugers, wie bspw. einem Kompressor oder einem Gebläse, kann ein Volumenstrom erzeugt werden, der das mindestens eine erfindungsgemäß vorgesehene Adsorptionselement umströmt und zusammen mit jeweiligen desorbierten Schadstoffen in einen Speicher strömt. Dabei kann zusätzlich an dem Speicher ein weiterer Druckerzeuger angeordnet sein, der den Volumenstrom in dem Speicher im Sinne eines Druckspeichers verdichtet.

In einer weiteren möglichen Ausgestaltung des vorgestellten Verfahrens ist vorgesehen, dass eine Vielzahl von Adsorptionselementen verwendet wird, und in einem zyklischen Betrieb zu einem ersten Zeitpunkt in dem Abgas enthaltene Schadstoffe zumindest teilweise in einem ersten Teil der Vielzahl Adsorptionselemente gebunden werden und ein zweiter Teil der Vielzahl der Adsorptionselemente regeneriert wird. Dabei ist weiterhin vorgesehen, dass zu einem zweiten Zeitpunkt in dem Abgas enthaltene Schadstoffe zumindest teilweise in dem zweiten Teil der Vielzahl Adsorptionselemente gebunden werden und der erste Teil der Vielzahl der Adsorptionselemente regeneriert wird.

Um eine kontinuierliche Durchführung des vorgestellten Verfahrens zu ermöglichen, ist es insbesondere vorgesehen, dass eine Vielzahl von Adsorptionselementen, insbesondere zwei Adsorptionselemente verwendet werden. Durch eine Vielzahl von Adsorptionselementen ist es möglich, einzelne Adsorptionselemente der Vielzahl Adsorptionselemente in einem sequenziellen Betrieb zunächst zur Adsorption von Schadstoffen zu verwenden und anschließend einem Desorptionsvorgang zu unterziehen. Dabei ist vorgesehen, dass jeweilige Adsorptionselemente derart verwendet werden, dass während ein erstes Adsorptionselement zur Adsorption von Schadstoffen verwendet wird, ein weiteres Adsorptionselement in einem zeitlich parallelen Vorgang einem Desorptionsvorgang unterzogen wird und umgekehrt. Entsprechend steht zu jedem Zeitpunkt mindestens ein Adsorptionselement mit einer in Abhängigkeit einer vorgegebenen zeitlichen Abfolge von Adsorptions- und Desorptionssequenzen frei werdenden Kapazität zur Adsorption bzw. zur Anreicherung von Schadstoffen zur Verfügung.

In einer weiteren möglichen Ausgestaltung des vorgestellten Verfahrens ist vorgesehen, dass Kleinstpartikel in durch die Brennkraftmaschine erzeugtem Abgas in mindestens einem in Strömungsrichtung von durch die Brennkraftmaschine erzeugtem Abgas vor und/oder hinter dem mindestens einen Adsorptionselement angeordneten Filterelement gespeichert werden.

Um einen von einer jeweiligen Brennkraftmaschine erzeugten Abgasstrom derart zu reinigen, dass dessen Schadstoffausstoß innerhalb jeweiliger Grenzwerte für insbesondere Kleinstpartikel, wie bspw. Stickoxide liegt, können in einem zur Durchführung des vorgestellten Verfahrens vorgesehenen Abgaspfad Filterelemente angeordnet werden, die zur Aufnahme der Kleinstpartikel geeignet sind. Derartige Filterelemente können bspw. bei einer Wartung ausgetauscht und außerhalb der Brennkraftmaschine entleert bzw. für eine Wiederverwendung aufbereitet werden.

In einer weiteren möglichen Ausgestaltung des vorgestellten Verfahrens ist vorgesehen, dass eine Temperatur des Abgases mittels mindestens eines

Kühlelements und/oder mindestens eines Heizelements auf eine für eine Adsorption der Schadstoffe geeignete Temperatur eingestellt wird.

Um eine besonders effiziente Anreicherung von Schadstoffen an dem mindestens einen erfindungsgemäß vorgesehenen Adsorptionselement zu ermöglichen, ist es besonders vorteilhaft, eine Temperatur des Adsorptionselements oder einer Umgebung des Adsorptionselements einzustellen, bei der das Adsorptionselement eine starke Wechselwirkung mit den Schadstoffen zeigt. Dazu kann bspw. vorgesehen sein, dass Abgas, das das Adsorptionselement anströmt, auf eine Temperatur zwischen 100°C und 500°C, insbesondere auf ca. 100°C heruntergekühlt wird.

In einer weiteren möglichen Ausgestaltung des vorgestellten Verfahrens ist vorgesehen, dass in dem Speicher gespeicherte Schadstoffe aus dem mindestens einen Speicher in einen bezüglich der Brennkraftmaschine externen Speicher überführt werden.

Um einen Speicher eines zur Durchführung des vorgestellten Verfahrens konfigurierten Abgassystems zu regenerieren und entsprechend für eine Aufnahme von weiteren Schadstoffen vorzubereiten, kann vorgesehen sein, dass in dem Speicher gespeicherte Schadstoffe in einen externen Speicher, wie bspw. einen Druckspeicher übertragen werden. Dazu kann ein Druckerzeuger an dem Speicher des Abgassystems angeordnet sein oder ein Unterdruckerzeuger an dem externen Speicher verwendet werden, um einen Druckgradienten zu erzeugen, gemäß dem sich die Schadstoffe auf die verschiedenen Speicher verteilen.

Das vorgestellte Verfahren dient insbesondere zum Entfernen von Kohlenstoffdioxid aus einem Abgas einer Brennkraftmaschine. Selbstverständlich eignet sich das vorgestellte Verfahren auch zur Adsorption und Desorption von weiteren Schadstoffen, wie bspw. Kohlestoffmonoxid, Stickstoffmonoxid, Stickstoffdioxid oder weiteren Stickoxiden.

Ferner betrifft die vorgestellte Erfindung ein Abgassystem für eine Brennkraftmaschine, mit einem Abgaspfad und mindestens einem in dem Abgaspfad angeordneten Adsorptionselement, wobei das mindestens eine Adsorptionselement dazu konfiguriert ist, in dem Abgas enthaltene Schadstoffe zumindest teilweise in einem Adsorptionsprozess zu binden, und wobei das mindestens eine Adsorptionselement dazu konfiguriert ist, durch zumindest teilweise Desorption der gebundenen Schadstoffe regeneriert zu werden. Dabei ist vorgesehen, dass das Abgassystem mindestens einen Speicher umfasst, in dem während einer Desorption von dem mindestens einen Adsorptionselement desorbierte Schadstoffe zu speichern sind, und dass das mindestens eine Adsorptionselement dazu konfiguriert ist, mittels Durchströmung des mindestens Adsorptionselements mit einem Hilfsgas regeneriert zu werden.

Beispielsweise ist es mittels des erfindungsgemäßen Abgassystems möglich, mit zwei Kohlenstoffdioxidadsorptionselementen zu je 10 kg Eigengewicht etwa 2 kg Kohlenstoffdioxid zu binden. Dabei wird angenommen, dass 1 kg Kohlenstoffdioxid auf 10 kg Adsorbermasse gebunden werden, was einer Bindungskapazität der Kohlenstoffdioxidadsorptionselemente von 10% entspricht. In einer 10 Liter Kohlenstoffdioxidflasche könnten entsprechend nach 5 Zyklen mit jeweiligen Adsorptions- und Desorptionschritten, etwa 10 kg Kohlenstoffdioxid zurückgewonnen werden, was bei einem Ausstoß von 110 g Kohlenstoffdioxid pro Kilometer durch eine Brennkraftmaschine eines Fahrzeugs etwa einer Reduktion einer Kohlenstoffdioxidbelastung der Brennkraftmaschine von 20% entspricht.

Das vorgestellte Abgassystem dient insbesondere zur Durchführung des vorgestellten Verfahrens.

Ferner betrifft die vorgestellte Erfindung ein zur Durchführung des vorgestellten Verfahrens konfiguriertes Fahrzeug.

Das vorgestellte Abgassystem dient insbesondere zum Betrieb des vorgestellten Fahrzeugs.

Weitere Vorteile und Ausgestaltungen ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

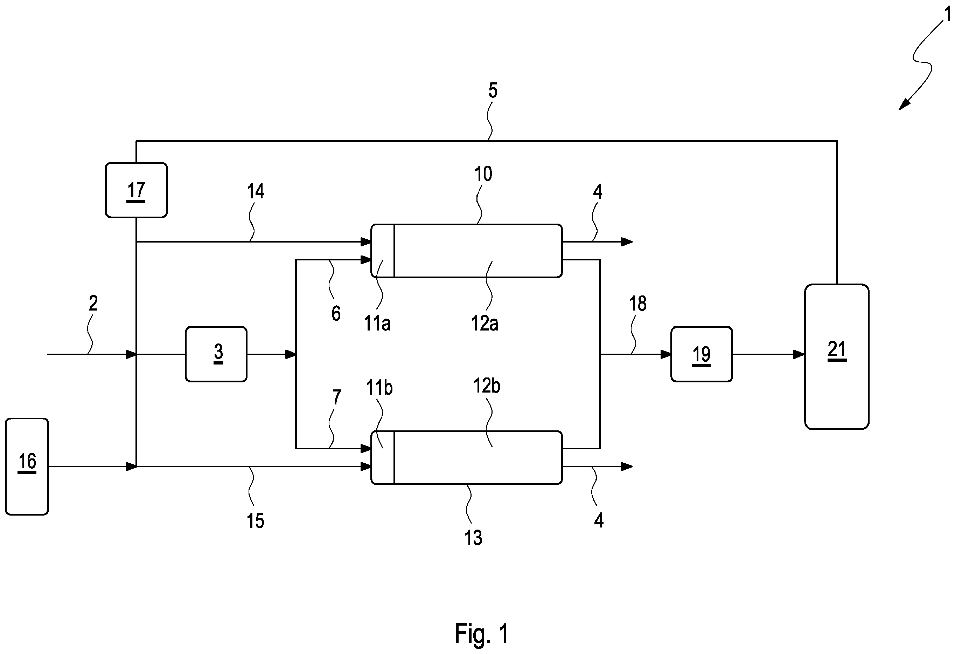

Figur 1 zeigt eine mögliche Ausgestaltung des erfindungsgemäßen Abgassystems.

In Figur 1 ist ein Abgassystem 1 einer Brennkraftmaschine dargestellt. Zum Reinigen von durch die Brennkraftmaschine erzeugtem Abgas wird das Abgas in einem Abgasmassenstrom, wie durch Pfeil 2 angedeutet, zunächst über einen Kühler 3 zumindest teilweise entfeuchtet und anschließend in zwei Abgasströme geteilt, wie durch die Pfeile 6 und 7 angedeutet.

Ein erster Abgasstrom wird, wie durch Pfeil 6 angedeutet, in eine erste Kartusche 10 geleitet, die einen ersten Vorfilter 11a und ein erstes Kohlenstoffdioxidadsorptionselement 12a umfasst. Ein zweiter Abgasstrom wird, wie durch Pfeil 7 angedeutet, in eine zweite Kartusche 13 geleitet, die einen zweiten Vorfilter 11b und ein zweites Kohlenstoffdioxidadsorptionselement 12b umfasst.

Während die Vorfilter 11a und 11b Komponenten, wie bspw. Stickoxide, Kohlenwasserstoffe und Kohlenstoffmonoxid aufnehmen, wird durch die Kohlenstoffdioxidadsorptionselemente 12a und 12b in dem Abgas enthaltenes Kohlenstoffdioxid zumindest teilweise adsorbiert. Entsprechend entweicht aus den Kartuschen 10 und 13 kohlenstoffdioxidarmes Abgas, wie durch Pfeile 4 angedeutet.

Sobald eine Kapazität zur Aufnahme von Kohlenstoffdioxid der ersten Kartusche 10 erschöpft ist, was bspw. bei einer adsorbierten Schadstoffmasse der Fall ist, die etwa 10 % eines Eigengewichts des Kohlenstoffdioxidadsorptionselements 12a entspricht, wird der ursprüngliche Abgasstrom gemäß Pfeil 2 umgeleitet, wie durch Pfeil 14 angedeutet. Gleichzeitig wird die erste Kartusche 10 in einen Desorptionsmodus geschaltet, in dem das Kohlenstoffdioxidadsorptionselement 12a der Kartusche 10 mit einem Hilfsgas, wie bspw. reinem Kohlenstoffdioxid aus einem Hilfsgasspeicher 16 angeströmt wird. Das Hilfsgas wird über einen Wärmetauscher 17 in einen hochtemperierten Zustand überführt und schließlich in die in den Desorptionsmodus geschaltete Kartusche 10 eingeleitet. Der Wärmetauscher kann bspw. aus einem Speicher mit heißen Abgasen versorgt werden, um das Hilfsgas zu erwärmen.

In der Kartusche 10 führt das hochtemperierte Hilfsgas zu einer Desorption von an dem Kohlenstoffdioxidadsorptionselement 12a angereicherten Schadstoffen und strömt, zusammen mit den desorbierten Schadstoffen, wie durch Pfeil 18 angedeutet, über einen Kompressor 19 in einen Speicher 21. Nachdem das Kohlenstoffdioxidadsorptionselement 12a desorbiert und die Kartusche 10 entsprechend regeneriert wurde, wird der Abgasstrom gemäß Pfeil 2 abermals umgeleitet, wie durch Pfeil 15 angedeutet, so dass die Kartusche 13 regeneriert werden kann.

## Patentansprüche

1. Verfahren zum Reinigen von durch eine Brennkraftmaschine erzeugtem Abgas, bei dem das durch die Brennkraftmaschine erzeugte Abgas durch einen Abgaspfad geleitet wird, in dem mindestens ein Adsorptionselement (12a, 12b) angeordnet ist, an dem in dem Abgas enthaltene Schadstoffe zumindest teilweise gebunden werden,
und bei dem das mindestens eine Adsorptionselement (12a, 12b) durch zumindest teilweise Desorption der gebundenen Schadstoffe regeneriert wird,
und bei dem während der Desorption von dem mindestens einen Adsorptionselement (12a, 12b) desorbierte Schadstoffe in mindestens einem Speicher gespeichert werden,
**dadurch gekennzeichnet, dass** das mindestens eine Adsorptionselement (12a, 12b) mittels Durchströmung des mindestens einen Adsorptionselements (12a, 12b) mit einem Hilfsgas regeneriert wird.

2. Verfahren nach Anspruch 1, bei dem das mindestens eine Adsorptionselement (12a, 12b) mindestens eine Adsorptionsschicht aus einem Material der folgenden Liste an Materialien oder einer Kombination daraus aufweist: Aluminiumoxid oder Aluminiumsilikat.

3. Verfahren nach Anspruch 2, bei dem das mindestens eine Adsorptionselement (12a, 12b) ein festes Adsorptionselement (12a, 12b) mit einer anorganischen oder organischen Matrix ist, und bei dem die Schadstoffe an der mindestens einen Adsorptionsschicht regenerativ und/oder physisorptiv gebunden werden.

4. Verfahren nach einem der voranstehenden Ansprüche, bei dem durch das mindestens eine Adsorptionselement (12a, 12b) gebundene Schadstoffe mittels Durchströmung des mindestens einen Adsorptionselements (12a, 12b) mit einem Hilfsgas und eines Desorptionsverfahrens der folgenden Liste an Desorptionsverfahren oder einer Kombination daraus regeneriert wird: Erhöhung einer Temperatur des mindestens einen Adsorptionselements (12a, 12b), Erhöhung einer Temperatur in einer Umgebung des mindestens einen Adsorptionselements (12a, 12b), Reduktion eines Atmosphärendrucks in der Umgebung des mindestens einen Adsorptionselements (12a, 12b)..

5. Verfahren nach Anspruch 1, bei dem als Hilfsgas mittels eines Hilfsgasspeichers (16) bereitgestelltes reines Kohlenstoffdioxid und/oder synthetische Luft verwendet wird.

6. Verfahren nach Anspruch 4 oder 5, bei dem das Hilfsgas zumindest teilweise aus dem mindestens einen Speicher (21) entnommen wird.

7. Verfahren nach einem der voranstehenden Ansprüche, bei dem während der Desorption von dem mindestens einen Adsorptionselement (12a, 12b) freigesetzte Schadstoffe mittels eines Druckerzeugers (19) in den mindestens einen Speicher (21) geleitet und in dem mindestens einen Speicher (21) unter Erzeugung von Druck angereichert werden.

8. Verfahren nach einem der voranstehenden Ansprüche, bei dem eine Vielzahl von Adsorptionselementen (12a, 12b) verwendet wird, und bei dem in einem zyklischen Betrieb zu einem ersten Zeitpunkt in dem Abgas enthaltene Schadstoffe zumindest teilweise in einem ersten Teil (12a) der Vielzahl Adsorptionselemente gebunden werden und ein zweiter Teil (12b) der Vielzahl der Adsorptionselemente regeneriert wird, und bei dem zu einem zweiten Zeitpunkt in dem Abgas enthaltene Schadstoffe zumindest teilweise in dem zweiten Teil (12b) der Vielzahl Adsorptionselemente gebunden werden und der erste Teil (12a) der Vielzahl der Adsorptionselemente regeneriert wird.

9. Verfahren nach einem der voranstehenden Ansprüche, bei dem Kleinstpartikel in durch die Brennkraftmaschine erzeugtem Abgas in mindestens einem in Strömungsrichtung von durch die Brennkraftmaschine erzeugtem Abgas vor und/oder hinter dem mindestens einen Adsorptionselement (12a, 12b) angeordneten Filterelement (11a, 11b) gespeichert werden.

10. Verfahren nach Anspruch 9, bei dem das mindestens eine Filterelement (11a, 11b) aus der Brennkraftmaschine ausgebaut und regeneriert wird.

11. Verfahren nach einem der voranstehenden Ansprüche, bei dem eine Temperatur des Abgases mittels mindestens eines Kühlelements (3) und/oder mindestens eines Heizelements (17) auf eine für eine Adsorption der Schadstoffe geeignete Temperatur eingestellt wird.

12. Verfahren nach einem der voranstehenden Ansprüche, bei dem in dem Speicher (21) gespeicherte Schadstoffe aus dem mindestens einen Speicher (21) in einen bezüglich der Brennkraftmaschine externen Speicher überführt werden.

13. Verfahren nach einem der voranstehenden Ansprüche, bei dem als Schadstoff Kohlenstoffdioxid gewählt wird.

14. Abgassystem für eine Brennkraftmaschine, mit einem Abgaspfad und mindestens einem in dem Abgaspfad angeordneten Adsorptionselement (12a, 12b), wobei das mindestens eine Adsorptionselement (12a, 12b) dazu konfiguriert ist, in dem Abgas enthaltene Schadstoffe zumindest teilweise in einem Adsorptionsprozess zu binden,
und wobei das mindestens eine Adsorptionselement (12a, 12b) dazu konfiguriert ist, durch zumindest teilweise Desorption der gebundenen Schadstoffe regeneriert zu werden,
und wobei das Abgassystem mindestens einen Speicher umfasst, der dazu ausgelegt ist, während einer Desorption von dem mindestens einen Adsorptionselement (12a, 12b) desorbierte Schadstoffe zu speichern,
**dadurch gekennzeichnet, dass** das mindestens eine Adsorptionselement (12a, 12b) dazu konfiguriert ist, mittels Durchströmung des mindestens Adsorptionselements (12a, 12b) mit einem Hilfsgas regeneriert zu werden.

15. Fahrzeug mit einem Abgassystem, das zur Durchführung eines Verfahrens nach einem der Ansprüche 1 bis 13 konfiguriert ist.

## Claims

1. Method for purifying exhaust gas generated by an internal combustion engine, in which the exhaust gas generated by the internal combustion engine is conducted through an exhaust gas path in which at least one adsorption element (12a, 12b) is arranged, to which pollutants contained in the exhaust gas are at least partly bound,
and in which the at least one adsorption element (12a, 12b) is regenerated by at least partial desorption of the bound pollutants,
and in which pollutants desorbed from the at least one adsorption element (12a, 12b) during the desorption are stored in at least one storage unit,
**characterised in that** the at least one adsorption element (12a, 12b) is regenerated by flow of an auxiliary gas through the at least one adsorption element (12a, 12b).

2. Method according to claim 1, in which the at least one adsorption element (12a, 12b) has at least one adsorption layer made of a material from the following list of materials or a combination thereof: aluminium oxide or aluminium silicate.

3. Method according to claim 2, in which the at least one adsorption element (12a, 12b) is a solid adsorption element (12a, 12b) with an inorganic or organic matrix, and in which the pollutants are bound regeneratively and/or physisorptively to the at least one adsorption layer.

4. Method according to any of the preceding claims, in which pollutants bound by the at least one adsorption element (12a, 12b) are regenerated by means of flow of an auxiliary gas through the at least one adsorption element (12a, 12b) and by means of a desorption method from the following list of desorption methods or a combination thereof: raising a temperature of the at least one adsorption element (12a, 12b), raising a temperature in an environment of the at least one adsorption element (12a, 12b), reducing an atmospheric pressure in the environment of the at least one adsorption element (12a, 12b).

5. Method according to claim 1, in which pure carbon dioxide and/or synthetic air prepared by means of an auxiliary gas storage unit (16) is used as auxiliary gas.

6. Method according to claim 4 or 5, in which the auxiliary gas is taken at least partly from the at least one storage unit (21).

7. Method according to any of the preceding claims, in which pollutants released during the desorption from the at least one adsorption element (12a, 12b) are conducted by means of a pressure generator (19) into the at least one storage unit (21) and are enriched in the at least one storage unit (21), generating pressure.

8. Method according to any of the preceding claims, in which a plurality of adsorption elements (12a, 12b) is used, and in which, at a first point in time in a cyclical operation, pollutants contained in the exhaust gas are bound at least partly in a first portion (12a) of the plurality of adsorption elements and a second portion (12b) of the plurality of adsorption elements is regenerated, and in which, at a second point in time, pollutants contained in the exhaust gas are bound at least partly in the second portion (12b) of the plurality of adsorption elements and the first portion (12a) of the plurality of adsorption elements is regenerated.

9. Method according to any of the preceding claims, in which minute particles in exhaust gas generated by the internal combustion engine are stored in at least one filter element (11a, 11b) arranged upstream and/or downstream of the at least one adsorption element (12a, 12b) in the flow direction of exhaust gas generated by the internal combustion engine.

10. Method according to claim 9, in which the at least one filter element (11a, 11b) is removed from the internal combustion engine and regenerated.

11. Method according to any of the preceding claims, in which a temperature of the exhaust gas is set by means of at least one cooling element (3) and/or at least one heating element (17) to a suitable temperature for an adsorption of the pollutants.

12. Method according to any of the preceding claims, in which pollutants stored in the storage unit (21) are transferred from the at least one storage unit (21) into a storage unit which is external to the internal combustion engine.

13. Method according to any of the preceding claims, in which carbon dioxide is chosen as pollutant.

14. Exhaust gas system for an internal combustion engine, having an exhaust gas path and at least one adsorption element (12a, 12b) arranged in the exhaust gas path, wherein the at least one adsorption element (12a, 12b) is configured to at least partly bind pollutants contained in the exhaust gas in an adsorption process,
and wherein the at least one adsorption element (12a, 12b) is configured to be regenerated by at least partial desorption of the bound pollutants,
and wherein the exhaust gas system comprises at least one storage unit which is designed to store pollutants desorbed from the at least one adsorption element (12a, 12b) during a desorption,
**characterised in that** the at least one adsorption element (12a, 12b) is configured to be regenerated by flow of an auxiliary gas through the at least one adsorption element (12a, 12b).

15. Vehicle having an exhaust gas system which is configured to carry out a method according to any of claims 1 to 13.

## Revendications

1. Procédé d'épuration des gaz d'échappement produits par un moteur à combustion interne, dans lequel les gaz d'échappement produits par le moteur à combustion interne sont guidés à travers une voie pour les gaz d'échappement, dans laquelle au moins un élément d'adsorption (12a, 12b) est agencé, sur lequel les polluants contenus dans les gaz d'échappement sont au moins en partie fixés,
et dans lequel l'au moins un élément d'absorption (12a, 12b) est régénéré par la désorption au moins partielle des polluants fixés,
et dans lequel, pendant la désorption par l'au moins un élément d'adsorption (12a, 12b), des polluants désorbés sont stockés dans au moins un accumulateur,
**caractérisé en ce que** l'au moins un élément d'adsorption (12a, 12b) est régénéré avec un gaz auxiliaire au moyen du passage de l'au moins un élément d'adsorption (12a, 12b).

2. Procédé selon la revendication 1, dans lequel l'au moins un élément d'adsorption (12a, 12b) présente au moins une couche d'adsorption faite à partir d'un matériau de la liste suivante de matériaux ou d'une combinaison de ceux-ci : oxyde d'aluminium ou silicate d'aluminium.

3. Procédé selon la revendication 2, dans lequel l'au moins un élément d'adsorption (12a, 12b) est un élément d'adsorption (12a, 12b) fixe avec une matrice inorganique ou organique, et dans lequel les polluants sont fixés de manière régénérative et/ou physisorptive à l'au moins une couche d'adsorption.

4. Procédé selon l'une quelconque des revendications précédentes, dans lequel des polluants fixés à travers l'au moins un élément d'adsorption (12a, 12b) sont régénérés au moyen du passage de l'au moins un élément d'adsorption (12a, 12b) avec un gaz auxiliaire et d'un procédé de désorption de la liste suivante de procédés de désorption ou d'une combinaison de ceux-ci : augmentation d'une température de l'au moins un élément d'adsorption (12a, 12b), augmentation d'une température dans un entourage de l'au moins un élément d'adsorption (12a, 12b), réduction d'une pression atmosphérique dans l'entourage de l'au moins un élément d'adsorption (12a, 12b).

5. Procédé selon la revendication 1, dans lequel du dioxyde de carbone pur fourni au moyen d'un accumulateur de gaz auxiliaire (16) et/ou de l'air synthétique est utilisé en tant que gaz auxiliaire.

6. Procédé selon la revendication 4 ou 5, dans lequel le gaz auxiliaire est prélevé au moins en partie à partir de l'au moins un accumulateur (21).

7. Procédé selon l'une quelconque des revendications précédentes, dans lequel pendant la désorption de l'au moins un élément d'adsorption (12a, 12b), des polluants libérés sont guidés au moyen d'un générateur de pression (19) dans l'au moins un accumulateur (21) et sont enrichis dans l'au moins un accumulateur (21) par la production de pression.

8. Procédé selon l'une quelconque des revendications précédentes, dans lequel une pluralité d'éléments d'adsorption (12a, 12b) sont utilisés, et dans lequel, dans un fonctionnement cyclique à un premier moment, les polluants contenus dans le gaz d'échappement sont au moins en partie fixés dans une première partie (12a) de la pluralité des éléments d'adsorption et une seconde partie (12b) de la pluralité des éléments d'adsorption est régénérée, et dans lequel à un second moment les polluants contenus dans le gaz d'échappement sont au moins en partie fixés dans la seconde partie (12b) de la pluralité d'éléments d'adsorption et la première partie (12a) de la pluralité des éléments d'adsorption est régénérée.

9. Procédé selon l'une quelconque des revendications précédentes, dans lequel des particules fines sont accumulées dans le gaz d'échappement produit via le moteur à combustion interne dans au moins un élément filtrant (11a, 11b) agencé devant et/ou derrière l'au moins un élément d'adsorption (12a, 12b) dans la direction de passage du gaz d'échappement produit par le moteur à combustion interne.

10. Procédé selon la revendication 9, dans lequel l'au moins un élément filtrant (11a, 11b) est développé et régénéré à partir du moteur à combustion interne.

11. Procédé selon l'une quelconque des revendications précédentes, dans lequel une température du gaz d'échappement est réglée à une température appropriée pour une adsorption des polluants au moyen d'au moins un élément de refroidissement (3) et/ou d'au moins un élément chauffant (17).

12. Procédé selon l'une quelconque des revendications précédentes, dans lequel les polluants accumulés dans l'accumulateur (21) sont transférés à partir de l'au moins un accumulateur (21) dans un accumulateur externe en relation avec le moteur à combustion interne.

13. Procédé selon l'une quelconque des revendications précédentes, dans lequel le dioxyde de carbone est choisi en tant que polluant.

14. Système d'échappement pour une moteur à combustion interne, avec une voie pour les gaz d'échappement et au moins un élément d'adsorption (12a, 12b) agencé dans la voie pour les gaz d'échappement, dans lequel l'au moins un élément d'adsorption (12a, 12b) est configuré pour fixer des polluants contenus dans le gaz d'échappement au moins en partie dans un processus d'adsorption,
et dans lequel l'au moins un élément d'adsorption (12a, 12b) est configuré pour être régénéré par la désorption au moins partielle des polluants fixés,
et dans lequel le système de gaz d'échappement comprend au moins un accumulateur qui est conçu pour accumuler des polluants désorbés pendant une désorption de l'au moins un élément d'adsorption (12a, 12b), **caractérisé en ce que** l'au moins un élément d'adsorption (12a, 12b) est configuré pour être régénéré avec un gaz auxiliaire au moyen du passage de l'au moins un élément d'adsorption (12a, 12b).

15. Véhicule avec un système d'échappement qui est configuré pour l'exécution d'un procédé selon l'une quelconque des revendications 1 à 13.
